Europäisches Patentamt

European Patent Office

Office européen des brevets

(11) Numéro de publication: **0 046 831**
**B1**

(12) **FASCICULE DE BREVET EUROPEEN**

(45) Date de publication du fascicule du brevet: **05.12.84**

(21) Numéro de dépôt: **80430015.0**

(22) Date de dépôt: **26.08.80**

(51) Int. Cl.³: **H 04 L 1/18**

(54) Système de retransmission de trames numérotées et reçues en erreur dans un système de transmission de données.

(43) Date de publication de la demande:
**10.03.82 Bulletin 82/10**

(45) Mention de la délivrance du brevet:
**05.12.84 Bulletin 84/49**

(84) Etats contractants désignés:
**BE DE FR GB IT**

(56) Documents cités:
**US-A-3 671 945**
**US-A-3 979 719**

**IBM TECHNICAL DISCLOSURE BULLETIN, vol. 18, no. 19, février 1976, New York, US DEATON: "Data message acknow-ledgment technique", page 2990**
**AFIPS CONFERENCE PROCEEDINGS, 1980 National Computer Conference, May 19-22, 1980 Anaheim, California, US REED: "ARQ performance in SNA networks", pages 105-112**

(73) Titulaire: **International Business Machines Corporation**
**Old Orchard Road**
**Armonk, N.Y. 10504 (US)**

(72) Inventeur: **Donnan, Robert Anderson**
**Villa Pyracanthe 466 Chemin Celestin Freinet**
**F-06140 Vence (FR)**

(74) Mandataire: **de Pena, Alain**
**Compagnie IBM France Département de Propriété Industrielle**
**F-06610 La Gaude (FR)**

## Description

Domaine technique

La présente invention concerne les systèmes de transmission de données dans lesquels une station émettrice transmet des trames d'information numérotées en séquence à destination d'une station réceptrice, et plus particulièrement un procédé et un système pour commander la retransmission par la station émettrice des trames d'information en erreur. L'invention est particulièrement utile dans le systèmes de transmission de données utilisant une procédure de commande du type HDLC (de l'anglais High Level Data Link Control).

Etat de la technique

Dans les systèmes de transmission de données utilisant une procédure de commande du type HDLC, chaque station émet de l'information dans un format spécifique appelé trame d'information, et toutes les trames ainsi transmises sont numérotées en séquence. La station réceptrice vérifie les trames reçues pour déterminer la présence d'erreurs résultant de la transmission et demande à la station émettrice la retransmission des trames en erreur grâce à l'utilisation de deux commandes: Rejet (REJ) et Rejet Sélectif (SREJ). La commande REJ contient un numéro de trame et indique à la station émettrice de retransmettre toutes les trames d'information à partir de la trame ayant ce numéro. La commande SREJ est analogue à la commande REJ, mais la retransmission demandée ne concerne que la trame d'information ayant le numéro contenu dans la commande. Ces deux commandes accusent réception de toutes les trames qui précèdent celle dont le numéro est indiqué dans les commandes.

Cependant, dans les systèmes de transmission de données fonctionnant à des vitesses de transmission de l'ordre du mégabit/s. et dans lequels le temps de propagation allerretour entre deux stations est de l'ordre de 500 ms et plus, comme par exemple, dans les systèmes de transmission par satellite, l'utilisation des commandes REJ et SREJ présente des problèmes comme le montre l'exemple suivant.

On supposera qu'une liaison de données entre deux stations A et B présente un temps de propagation aller-retour équivalent à la durée de transmission de 39 trames, que la station A émet séquentiellement des trames numérotées 00, 01, 02, etc., et que les trames 03 et 06 sont reçues en erreur par la station B. Après avoir reçu la trame 04, la station B écarte la trame 04 et toutes les trames suivantes et transmet une commande REJ demandant la retransmission en séquence de toutes les trames à partir de la trame 03, et accusant réception de la trame 02 et de celles qui la précède. Cependant, à cause du temps de propagation la station A aura déjà transmit les trames 00 à 43 lorsqu'elle recevra la commande REJ; le temps passé pour transmettre les trames 04 à 43 est anisi perdu.

Dans l'exemple qui précède, une commande SREJ aurait pu être utilisée pour demander la retransmission de la trame 03. Cependant, étant donné que la commande SREJ, comme la commande REJ, accuse réception de toutes les trames qui précèdent celle dont la retransmission est demandée, la demande de retransmission de la trame 06 ne peut être faite avant que la trame 03 ait été correctement reçue. Ceci entraîne qu'une seule commande SREJ peut être utilisée pendant la durée d'un temps de propagation.

Ce qui précède montre que dans les systèmes de transmission dans lesquels le temps de propagation aller-retour est important, l'utilisation des commandes REJ et SREJ avec un taux d'erreur de transmission moyen entraîne une très forte dégradation du rendement de la transmission.

Selon une autre technique connue de retransmission de blocs de données en erreur, le récepteur envoie un accusé de réception après chacun des blocs de données reçus. Une telle technique est illustrée par le document US—A—3 979 917 qui décrit un système dans lequel l'émetteur transmet les données sous forme de blocs, chacun d'eux comprenant un numéro de séquence. Le récepteur, à la réception de chacun des blocs, le vérifie et transmet à l'émetteur un message de réponse qui est soit un accusé de réception positif ACK, soit un accusé de réception négatif, NACK. Chacun de ces messages de réponse contient le numéro de séquence du bloc reçu auquel il se rapporte, et un code de détection d'erreur BCC. Lorsque l'émetteur reçoit un message de réponse ACK correct, il libère la mémoire qui contenait le bloc correspondant. Lorsqu'un message de réponse NACK est reçu, l'émetteur retransmet le bloc correspondant. Si aucun message de réponse n'est reçu pendant un intervalle de temps donné, ou si le BCC reçu est incorrect, l'émetteur transmet un message de demande de réponse, RSP. Si le BCC reçu est correct, mais le numéro de séquence ne correspond pas à celui attendu, l'émetteur réagit par une action appropriée.

Un inconvénient du système décrit dans le document précité est que le grand nombre de messages de réponse et de messages RSP émis par le récepteur ou l'émetteur entraîne un accroissement non négligeable de l'occupation non utile du canal de transmission utilisé.

Un autre inconvénient du système décrit dans le document précité est qu'il exige un traitement important de messages par l'émetteur:traitement des messages de réponse qui sont aussi nombreux que les blocs de données transmis, transmission des messages RSP et retransmission des blocs en erreur.

Un autre inconvénient du système décrit dans le document US—A—3 979 719 est qu'il est basé sur l'utilisation de mesures de temps qui sont difficiles à mettre en oeuvre et nécessitent l'utilisation de routines d'attente qui consomment un grand nombre de cycles machine.

Exposé de l'invention

L'objet de l'invention est de fournir, dans un système de transmission dans lequel l'information est transmise sous forme de trames numérotées en séquence, un procédé et un système de retransmission des trames qui amènent une amélioration substantielle du rendement lorsque le temps de propagation entre stations est important.

D'une manière générale, dans le système de l'invention chaque trame d'information contient un numéro dit de séquence d'émission N(S), un bit R indiquant si la trame a déjà été précédemment transmise, et un champ d'information contenant l'information à transmettre. Dans la station émettrice, à chacune des trames retransmises est associée une variable V(T) dont la valeur est représentative de l'ordre de retransmission de la trame dans la séquence des trames transmises pour la première fois.

Dans la station réceptrice, on vérifie les trames d'information reçues pour déterminer la présence d'erreurs et on détermine le numéro N(S) des trames en erreur. La station réceptrice émet à destination de la station émettrice un message dit de vérification (CP) contenant un numéro dit de séquence de réception N(R) représentatif du numéro N(S) de la trame d'information correcte la plus récemment reçue qui n'est pas une retransmission, et si au moins une trame est en erreur, au moins un identificateur N(X) représentatif du N(S) de la trame en erreur dont la retransmission est demandée. La station émettrice reçoit le message de vérification, retransmet les trames d'information demandées qui n'ont pas encore été retransmises, ne retransmet les trames d'information demandées qui ont déjà été retransmises qui si la variation V(T) associée à ces dernières est inférieure au numéro N(R) du message de vérification et met à jour la valeur de la variable V(T) associée avec chacune des trames retransmises.

Selon un mode de réalisation préféré de l'invention, les messages de vérification sont émis sur une base périodique et chacun d'eux contient un bit X dont la valeur indique si les valeurs comprises entre N(R) et le plus élevé des N(X) doivent aussi être considérées comme des N(X). D'autres bits dans la trame d'information ou dans le message CP sont prévus par d'autres fonctions non associées à cette invention ou pour un usage futur.

D'autres objets, caractéristiques et avantages de la présente invention ressortiront mieux de l'exposé qui suit, fait en référence aux dessins annexés à ce texte, qui représentent un mode de réalisation préféré de celle-ci.

Brève description des figures

La Figure 1 représente une station de données incorporant l'invention.
La Figure 2 représente le format d'une instruction Départ E/S.
La Figure 3 représente le format d'un mot de commande du canal (CCW).
La Figure 4 représente le format d'un mot d'adresse du canal (CAW).
La Figure 5 représente le format d'un mot d'état du canal (CSW).
La Figure 6 représente le format d'une trame contenant une commande SACM.
La Figure 7 représente le format d'une trame d'information (I).
La Figure 8 illustre le contenu de la table de retransmission de l'unité de contrôle.
La Figure 9 représente le format d'une trame contenant le message de vérification (CP).
La Figure 10 représente un exemple de réalisation du canal 7 de la Figure 1.
La Figure 11 représente un exemple de réalisation de l'unité de contrôle 2 de la Figure 1.
La Figure 12 illustre le contenu de la table de réception stockée dans la mémoire principale 5.

Avant de procéder à une description détaillée de la présente invention, il peut être utile de revoir les aspects essentiels de la procédure HDLC. Le but principal de la procédure HDLC est de permettre le transfert d'information entre deux stations de données situées aux extrémités respectives d'une liaison dans un système de transmission de données synchrone. Toutes les transmissions sont organisées dans un formant spécifique, la trame. Chaque trame a le même format illustré ci-dessous:

F, A, C, Info, FCS, F.

et comprend:

. un fanion (F) qui indique le début de la trame.
. une adresse (A) qui est l'adresse de la station éliognée.
. un champ de commande (C) qui spécifie l'objet de la trame.
. un champ d'information (info) optionnel qui contient l'information transmise.
* un champ de séquence de contrôle de trame (FCS) qui permet à la station réceptrice de vérifier si la trame reçue est en erreur.
. un fanion (F) qui indique la fin de la trame.

Le champ de commande définit trois types de trames:

. La trame d'information (I) qui, comme son nom l'indique, est utilisée pour le transfert d'information entre les stations.

. La trame de supervision (S) qui est utilisée pour accuser réception des trames d'information et demander la retransmission des trames d'information en erreur.

. Les trames non séquentielles (N) qui sont utilisées principalement pour initialiser et déconnecter la liaison, pour l'echange des identifications de stations et pour reporter certaines erreurs de procédure.

Une liaison de données, et par là même les stations peuvent être dans l'un des deux modes de fonctionnement suivants:

— Mode déconnecté, dans lequel seules des trames non séquentielles peuvent être transmises.

— Mode opérationnel, dans lequel des trames d'information, de supervision et non séquentielles peuvent être transmises. Dans la présente invention le mode opérationnel spécifique est désigné par Mode de Vérification Autonome.

Pour compléter cette brève description on pourra se référer par exemple aus normes internationales IS 3309—et IS 4335, et au document public IBM ''IBM Synchronous Data Link Control-General Information, Document No. GA 27-3093-2.

Mode de réalisation de l'invention

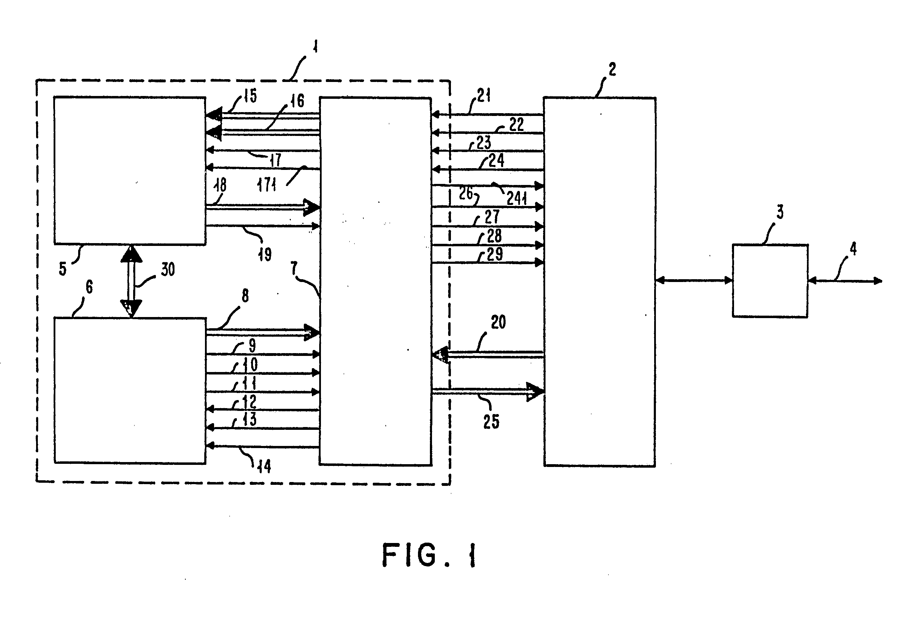

La Figure 1 représente schématiquement une station de données incorporant l'invention. Elle comprend un calculateur 1, une unité frontale de communication 2 qui, dans l'exemple de réalisation décrit est une unité de contrôle de communication, et un modem 3 qui relie la station de données au support de transmission qu'on a représenté sur la figure par une ligne de transmission 4. Le calculateur 1 peut être un calculateur IBM 360 ou IBM 370 et on n'a représenté sur la figure que les éléments aidant à la description de l'invention. Ces éléments sont une mémoire principale 5, une unité centrale de traitement (CPU) 6 et un canal 7.

L'unite centrale de traitement 6 contient des moyens d'adressage de la mémoire principale, de recherche et de stockage des informations, de traitement arithmétique et logique des données, de mise en séquence des instructions dans l'ordre voulu et d'initialisation des communications entre la mémoire principale et les unités externes qui lui sont attachées.

Le canal 7 contrôle le transfert des données entre la mémoire principale 5 et les stations de données éloignes reliées à la station de la Figure 1 par la ligne de transmission 4. Le canal 7 est relié à l'unite centrale de traitement de données 6, à la mémoire principale 5, et à l'unité de contrôle 2.

Le canal décharge l'unité centrale de traitement de la tâche de communiquer directement avec les stations de données éloignées, et permet au traitement des données dans le calculateur 1 de se dérouler en même temps que les opérations d'entrée-sortie.

Les opérations d'entrée-sortie permettent la circulation des informations entre la mémoire principale et les stations de données éloignées. L'unité de contrôle 2 commande les échanges de données entre la station de la Figure 1 et les stations éloignées. Elle comprend les circuits logiques et les mémoires intermédiaires nécessaires auxdits échanges de données.

Le modem 3 convertit les impulsions de données fournies par l'unité de contrôle 2 en signax susceptibles d'être transmis sur le support de transmission, et vice-versa.

Dans la description qui suit, on ne décrira ni l'unité centrale de traitement 6 ni la mémoire principale 5 qui peuvent être constituées, par exemple, par les unités correspondantes utilisées dans le calculateur IBM 360 ou IBM 370, et qui sont abondamment décrites dans la littérature.

Le canal 7 est relié à l'unité centrale de traitement 6, à la mémoire principale 5 et à l'unité de contrôle 2 par divers bus et lignes de commande. Dans un but de clarté, on n'a représenté sur la Figure 1 que les bus et les lignes de commande utiles à la description de l'invention.

Liaisons entre le canal et le CPU

Du CPU vers le canal.

Bus d'adresse 8:

Ce bus est utilisé pour fournir l'adresse du dispositif d'entrée-sortie sélectionné.

Ligne ''Départ'' 9:

Cette ligne est utilisée pour indiquer le démarrage d'une opération d'entrée-sortie.

Ligne ''Sélection du canal'' 10:

Cette ligne est utilisée pour provoquer le démarrage d'une opération d'entrée-sortie par le canal.

Ligne ''Interruption'' 11:

Cette ligne est utilisée pour provoquer une interruption de l'opération d'entrée-sortie en cours.

Du canal vers le CPU

Lignes de condition 12 et 13:

Elles sont utilisées pour indiquer les conditions du canal.

Ligne ''Demande d'interruption'' 14:

Cette ligne est utilisée pour indiquer au CPU que le canal demande une interruption de l'opération d'entrée-sortie en cours.

4

Liaisons entre le canal et la mémoire principale.

Du canal vers la mémoire principale.

Bus 15:

Bus d'adresse de mémoire.

Bus 16:

Bus d'entrée des données en mémoire.

Ligne "Demande d'Ecriture" 17:

Cette ligne est utilisée pour indiquer que le canal demande que lui soit transféré le contenu de la position adressée par le bus 15.

Ligne "Demande de Lecture" 171:

Cette ligne est utilisée pour indiquer que le canal veut emmagasiner un octet dans la position adressée par le bus 15.

De la mémoire principale vers le canal.

Bus 18:

Bus de sortie des données en mémoire.

Ligne "Acceptation d'Adresse" 19:

Cette ligne est utilisée pour indiquer que l'adresse sur le bus 15 a été acceptée.

Liaisons entre le canal et l'unité de contrôle.

De l'unité de contrôle vers le canal.

Bus 20:

Bus d'entrée du canal.

Ligne "Entrée disponible" 21:

Cette ligne est utilisée pour indiquer que l'unité de contrôle est sélectionnée et communique avec le canal.

Ligne "Entrée d'adresse" 22:

Cette ligne est utilisée pour indiquer que l'unité de contrôle a placé une adresse sur le bus 20.

Ligne "Entrée d'état" 23:

Cette ligne est utilisée pour indiquer que l'unité de contrôle a placé une information d'état sur le bus 20.

Ligne "Entrée de service" 24:

Cette ligne est utilisée pour signaler au canal que l'unité de contrôle désire transmettre ou recevoir un octet.

Ligne "Demande d'Entrée" 241:

Cette ligne est utilisée pour indiquer au canal que l'unité de contrôle est prête à transmettre une information d'état ou des données au canal et demande à être sélectionnée.

Du canal vers l'unité de contrôle.

Bus 25:

Bus de sortie du canal.

Ligne "Sortie de commande" 26:

Cette ligne est utilisée pour indiquer que le canal a placé une commande sur le bus 25.

Ligne "Sortie d'adresse" 27:

Cette ligne est utilisée pour indiquer que le canal a placé une adresse sur le bus 25.

Ligne "Sortie de service" 28:

Cette ligne est utilisée pour indiquer que le canal a accepté l'information sur le bus 20 ou a fourni sur le bus 25 l'information demandée par la ligne Entrée de service.

Ligne "Sortie de sélection" 29:

Cette ligne est utilisée pour sélectionner l'unité de contrôle.

Liaisons entre le CPU et la mémoire principale.

Ces liaisons ne sont pas utiles pour la description de l'invention et ont été représentées par un bus bidirectionnel 30.

Avant de décrire la constitution détaillée et le fonctionnement de la station de la Figure 1, il est préférable de décrire brièvement les formats des instructions et des mots de contrôle utilisés.

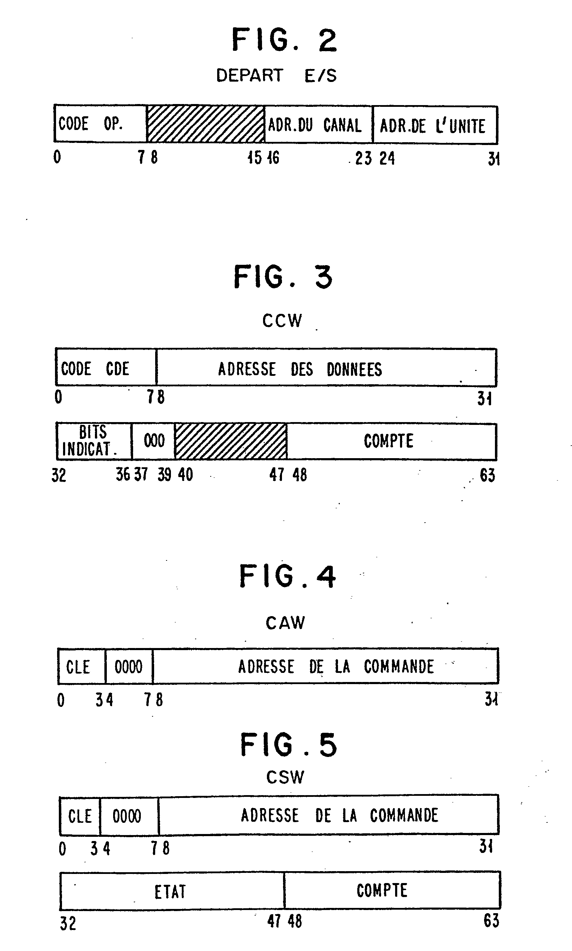

La Figure 2 représente le format de l'instruction Départ E/S par laquelle l'unité centrale de traitement initie une opération d'entrée-sortie.

L'instruction Départ E/S a 32 bits.

Les bits 0 à 7 définissent le code opération qui spécifie l'instruction Départ E/S.

Les bits 8 à 15 sont ignorés.

Les bits 16 à 23 contiennent l'adresse du canal, tandis que les bits 24 à 31 identifient l'unité de contrôle et la station éloignée adressée.

La Figure 3 représente le format d'un mot de commande du canal. Ce mot de 64 bits, appelé CCW, spécifie la commande à exécuter; s'il s'agit de commandes initialisant des opérations d'entrée- sortie, il désigne la zone de mémoire associée à l'opération et indique les mesures qui devront être prises après achèvement du transfert de données à destination ou en provenance de cette zone.

Les fonctions attribuées aux différents champs du CCW sont les suivantes:

Code commande:

Les bits 0 à 7 indiquent l'opération à exécuter.

Adresse des données:

Les bits 8 à 31 indiquent l'adresse d'un octet en mémoire principale. C'est la première position de mémoire de la zone indiquée par le CCW.

Bit indicateur de chaînage de données (CD):

Si le bit 32 est à 1, les données sont chaînées. La zone de mémoire indiquée par le CCW suivant sera alors utilisée avec l'opération en cours.

Bit indicateur de chaînage des commandes (CC):

Si le bit 33 est à 1, et si le bit 32 est à 0, les commandes sont chaînées. L'opération spécifiée par le code commande du CCW suivant est alors déclenchée automatiquement dès qui l'opération en cours s'est achevée normalement.

Bit indicateur de suppression d'indication de longueur (SLI):

Le bit 34 contrôle si une condition de longueur incorrecte doit ou non être signalée au programme. Si ce bit est à 1, et si le bit CD (chaînage de données) est à 0, dans le dernier CCW utilisé, l'indication de longueur incorrecte est supprimée. Quand les bits CC et SLI sont égaux à 1, le chaînage de commandes a lieu sans tenir compte de la présence d'une condition de longueur incorrecte.

Bit indicateur de saut (SAUT):

Lorsque ce bit (bit 35) est à 1, le transfert d'informations vers la mémoire, au cours d'une opération de lecture, lecture arrière, ou analyse, est supprimé.

Bit indicateur d'interruption contrôlée par le programme (PCI):

Si ce bit (bit 36) est à 1, le canal génère une condition d'interruption lorsque le CCW prend le contrôle du canal. Si ce bit est à 0, l'opération a lieu normalement.

Compte:

les bits 48 à 63 indiquent le nombre de positions d'octets (8 bits) que comporte la zone de mémoire désignée par le CCW.

Les positions de bit 37 à 39 contiennent des zéros. Le contenu des positions de bit 40 à 47 est ignoré.

La Figure 4 représente le format du mot d'adresse du canal (CAW). Ce mot indique la clef de protection et l'adresse du premier CCW associé à l'instruction Départ E/S. Il est emmagasiné à une adresse fixe dans la mémoire principale.

Les fonctions affectées aux différents champs du CAW sont les suivantes:

Clé de protection:

Les bits 0 à 3 constituent la clé de protection valable pour toutes les commandes associées à l'instruction Départ E/S. Cette clé est comparée à une clé mémoire chaque fois qu'il est fait référence à une zone de mémoire centrale.

Adresse de la commande:

Les bits 8 à 31 indiquent la position du premier CCW dans la mémoire principale.

La Figure 5 représente le format du mot d'état du canal. Le mot d'état du canal (CSW) fournit au programme l'état d'une unité d'entrée-sortie ou les conditions dans lesquelles une opération d'entrée-sortie a été arrêtée. Le CSW est formé, ou certaines de ses parties sont remplacées, notamment au cours des interruptions d'entrée-sortie et pendant l'exécution d'une instruction Départ E/S. Le CSW est placé en mémoire principale à une adresse fixe et est disponible pour le programme à cette adresse jusqu'au moment où l'interruption d'entrée-sortie suivante se produit, ou jusqu'à ce qu'une autre instruction d'entrée-sortie provoque le remplacement de son contenu.

La signification des différents champs du CSW est la suivante:

Clé de protection:

Les bits 0 à 3 forment la clé de protection mémoire utilisée dans la chaîne d'opérations.

Adresse de la commande:

Les bits 8 à 31 forment l'adresse, qui est supérieure de huit à l'adresse du dernier CCW utilisée.

Etat:

Les bits 32 à 47 identifient les conditions qui, dans l'unité et le canal, ont provoqué la mise en mémoire du CSW.

Compte:

Les bits 48 à 63 forment le compte résiduel pour le dernier CCW utilisé.

Les formats décrits en référence aux Figures 2 à 5 sont ceux utilisés par les calculateurs IBM 360 et IBM 370 et on pourra se référer au document public IBM:

6

"IBM System 370—Principles of Operation", référence GA22-7000-5, No. S/370-01, pour en obtenir tous les détails.

On décrira maintenant le fonctionnement de la station de données incorporant l'invention illustrée sur la Figure 1.

Pour simplifier la description de l'invention on supposera que la station de la Figure 1 (qu'on désignera par la suite par station locale) est reliée à une seule autre station éloignée qui lui est identique. Selon l'invention, chaque station transmet des trames d'information, de supervision et non séquentielles.

On supposera également que le programme d'application en cours d'exécution dans le calculateur 1 désire transmettre plusieurs blocs de données à la station de données éloignée. Chacun des blocs de données comprend un nombre prédéterminé d'octets et est stocké dans une zone de la mémoire principale 5. Avant de transmettre les blocs de données, la station locale doit mettre la station éloignée réceptrice en un mode de fonctionnement approprié désigné "mode de vérification autonome" (ACM), à moins bien sûr qu'elle ne soit déjà dans ce mode. Ce mode de fonctionnement, qui est propre à l'invention apparaîtra clairement tout du long de la description de l'invention.

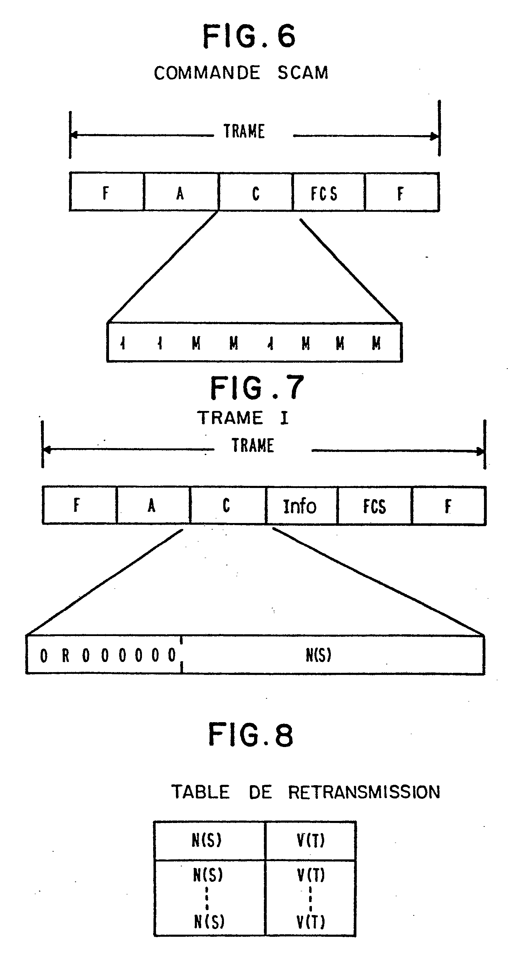

La station locale met la station éloignée en état de fonctionnement en mode ACM au moyen d'une commande qu'on désignera par "commande SACM", et qui peut être transmise par exemple au moyen d'une trame non séquentielle de la procédure HDLC et illustrée sur la figure 6. La trame non séquentielle utilisée pour véhiculer la commande SACM comprend un fanion (F) de début de trame qui a la configuration binaire connue 01111110, une adresse (A) qui est l'adresse de la station éloignée, un champ de commande (C) contenant la commande SACM, un champ de séquence de contrôle de trame (FCS) et un fanion (F) de fin de trame identique au fanion de début de trame. La commande SACM est constituée par un octet dont les bits 1 et 2 sont tous deux à 1 spécifiant ainsi qu'il s'agit d'une trame non séquentielle, le bit 5 est à l indiquant une demande de réponse, et les autres bits (désignés M) ont une valeur prédéterminée indiquant qu'il s'agit d'une commande SACM.

Pour transmettre la commande SACM, le programme d'application en cours d'exécution dans le calculateur de la station primaire inscrit les informations nécessaires dans un mot de commande du canal CCW. Ces informations sont les suivantes:

Code commande          : code ecriture
Adresse des données  : adresse de la position de mémoire contenant la commande SACM
Bits indicateurs       : 0
Compte                 : 1

Le programme d'application inscrit l'adresse du canal, celle de l'unité de contrôle, et celle de la station éloignée dans une instruction Départ E/S, l'adresse du CCW associé à la commande SACM dans le champ d'adresse du mot d'adresse du canal CAW, et transfère le contrôle des opérations au programme superviseur qui initie la transmission de la commande SACM en exécutant l'instruction Départ E/S. En réponse à cette instruction, le CPU 6 lève les lignes de commande Départ 9 et Sélection du canal 10 et place sur le bus d'adresse 8 l'adresse contenue dans l'instruction Départ E/S. Le canal 7 détecte l'état des lignes 9 et 10 et, s'il est occupé, en informe le CPU 6 en plaçant un code condition approprié sur les lignes de condition 12 et 13.

Si le canal est disponible, il initie une opération de sélection de l'unité de contrôle. Pour cela, il emmagasine l'adresse disponible sur le bus d'adresse 8, et demande à la mémoire principale de lui transmettre le CAW en levant la ligne Demande d'écriture 17 et en plaçant l'adresse du CAW sur le bus d'adresse de mémoire 15. La mémoire principale 5 place le CAW sur le bus 18 et lève la ligne Acceptation 19. Le canal emmagasine l'adresse du CCW contenue dans le CAW dans un registre d'adresse de commande. Le canal demande alors à la mémoire principale 5 de lui transférer le CCW en levant la ligne Demande d'écriture 17 et en plaçant l'adresse du CCW sur le bus 15. La mémoire principale 5 transfère le CCW au canal qui emmagasine les champs Adresse des données, Bits indicateurs et Compte dans des registres appropriés et qui incrémente de huit unités l'adresse stockée dans son registre d'adresse de commande.

Le canal 7 envoie l'adresse d'unité qu'il a reçue du CPU 6 à l'unité de contrôle en la plaçant sur le bus de sortie 25 et en levant les lignes Sortie d'adresse 27 et Sortie de sélection 29. L'unité de contrôle 2 détecte l'état des lignes 27 et 29, décode l'adresse d'unité et si elle l'accepte, lève les lignes Entrée disponible 21 et Entrée d'adresse 22 et place l'adresse d'unité sur le bus d'entrée 20. Le canal compare l'adresse d'unité qu'il reçoit de l'unité de contrôle avec celle qu'il a reçu du CPU et si elles sont identiques, transmet le code de commande du CCW à l'unité de contrôle 2 en le plaçant sur le bus de sortie 25 et en levant la ligne Sortie de commande 26. Si l'unité de contrôle accepte la commande, elle lève la ligne Entrée d'état 23 et place sur le bus d'entrée 20 un état approprié, par exemple l'état zéro. En réponse, le canal libère le CPU en plaçant le code de condition approprié sur les lignes de condition 12 et 13. L'opération de sélection de l'unité de contrôle est terminée.

L'unité de contrôle, lorsqu'elle reconnaît la commande d'écriture, place le fanion de début de trame puis l'adresse de la station éloignée sur la ligne de transmission et demande au canal l'octet à transmettre en levant la ligne Entrée de service 24. En réponse, le canal lève la ligne Demande d'écriture 17, place sur le bus l'adresse de mémoire 15, l'adresse des données contenue dans le CCW associé à la commande SACM, incrémente cette adresse d'une unité et diminue le contenu de son registre de compte d'une unité. La mémoire principale place la commande SACM sur le bus de sortie des données 18 et le canal le retransmet à l'unité de contrôle par le bus de sortie 25 et lève la ligne Sortie de service 28. L'unité de contrôle transmet la commande SACM dans le champ de commande de la trame puis demande au canal le deuxième octet à transmettre en levant la ligne Entrée de service 24. Le contenu du registre de compte du canal étant à zéro, le canal en réponse lève la ligne Sortie de commande 26, ce qui indique une condition d'arrêt à l'unité de contrôle. L'unité de contrôle transmet alors successivement sur la ligne de transmission la séquence FCS et le fanion de fin de trame conformément à la procédure HDLC, lève la ligne Entrée d'état 23 et place sur le bus d'entrée 20 les conditions Fin sur canal et Fin sur unité.

En réponse, le canal vérifie le bit indicateur CC du CCW en cours, C'est-à-dire du CCW associé la commande SACM, et comme ce bit a la valeur 0, il demande une interruption d'entrée-sortie à l'unité centrale de traitement 6 en levant la ligne Demande d'interruption 14, et attend que l'unité centrale de traitement 6 lève la ligne Interruption 11. Le canal place alors sur le bus d'entrée des données en mémoire 16 les conditions dans lesquelles l'opération a été arrêtée pour inscription dans le mot d'état du canal CSW.

Le contrôle des opérations est passé au programme superviseur qui détermine quel est le programme d'application qui a demandé l'opération d'entré-sortie qui vient de s'achever, et qui passe le contrôle à ce programme d'application.

Celui-ci, qui attend une réponse à la commande SACM, initie alors une opération de lecture.

La station éloignée reçoit la commande SACM et, si elle l'accepte, envoie à la station locale un accusé de réception qui peut prendre la forme, par exemple, de la réponse d'acceptation non séquentielle (UA) de la procédure HDLC. La réponse UA ne diffère de la commande SACM que par le bit 5 du champ de commande qui est à la valeur "0" a lieu de "1". L'unité de contrôle 2 de la station primaire reçoit la réponse UA et si la trame la contenant est corrects, elle emmagasine la réponse UA dans une mémoire temporaire et attend une opération de lecture par le canal 7. Le programme d'application dans la calculateur 1 inscrit les informations nécessaires à la lecture de la réponse UA dans un mot de commande du canal CCW. Ces informations sont les suivantes:

Code commande : code lecture  
Adresse des données : adresse de la position de mémoire dans laquelle la réponse UA doit être stockée.  
Bits indicateurs : 0  
Compte : 1

Le programme d'application inscrit l'adresse du canal, celle de l'unité de contrôle et celle de la station éloignée dans une instruction Départ E/S, l'adresse du CCW associée à la réponse UA dans le champ d'adresse du mot d'adresse du canal CAW et transfère le contrôle des opérations au programme superviseur qui initie la lecture de la réponse UA en exécutant l'instruction Départ E/S. La sélection de l'unité de contrôle s'effectue de façon semblable à celle précédemment décrite. Lorsque l'unité de contrôle détecte la commande lecture qu'elle a reçu du canal elle lève la ligne Entrée de service 24 et place la réponse UA puis les conditions Fin sur canal et Fin sur unité sur le bus d'entrée 20 comme vu plus haut. Le canal transfère la réponse UA à la mémoire 5 par le bus d'entrée des données en mémoire 16 et demande une interruption pour mettre à jour le mot d'état du canal CSW comme vu plus haut.

Le programme d'application initie alors la transmission des blocs de données. Chacun des blocs de données est envoyé à la station éloignée sous la forme d'une trame d'information (I) dont le format est illustré sur la Figure 7. La trame comprend, de façon connue, le fanion (F) de début de trame, l'adresse (A) de la station éloignée, un champ de commande (C), un champ d'information (Info) qui contient les données du bloc à transmettre, une séquence FCS et le fanion de fin de trame.

Cependant, le champ de commande (C) a une configuration spécifique à l'invention, comme décrit ci-dessous:

Bit 1=0         Ce bit indique qu'il s'agit d'une trame d'information.  
Bit 2=R         Bit retransmission. Lorsque R=1 il indique que cette trame (I) est une retransmission.  
Bit 3—8=0      Bits de réserve.  
Bits 9—24= N(S)  Numéro de séquence d'émission de la trame. Dans l'example illustré il est défini par 6 bits.

On supposera que le programme d'application a inscrit les informations nécessaires à la transmission de chacun des blocs de données dans un mot de commande du canal CCW. Ces informations sont les suivantes:

Code commande : code écriture.
Adresse des
  données : adresse de la première position de la zone de mémoire
contenant le bloc de données à transmettre.

Bit indicateur CD ⎫
Bit indicateur CC ⎪
Bit indicateur SLI ⎬ Selon programme d'application
Bit indicateur SAUT ⎪
Bit indicateur PCI ⎭
Compte : nombre de positions d'octets que compte la zone
contenant le bloc de données à transmettre.

Le programme d'application inscrit l'adresse du canal, celle de l'unité de contrôle, et celle de la station éloignée dans une instruction Départ E/S; l'adresse du premier CCW associé au premier bloc de données à transmettre dans le champ d'adresse du mot d'adresse du canal CAW, et transfère le contrôle des opérations au programme superviseur qui initie la transmission du premier bloc en exécutant l'instruction Départ E/S. Une opération de sélection de l'unité de contrôle semblable à celle décrite plus haut prend place.

L'unité de contrôle, lorsqu'elle reconnaît la commande d'écriture du CCW en cours, place le fanion de début de trame puis l'adresse de la station réceptrice sur la ligne de transmission et demande au canal le premier octet du premier bloc à transmettre en levant la ligne Entrée de service 24. En réponse, le canal lève la ligne Demande d'écriture 17, place sur le bus l'adresse de mémoire 15, l'adresse des données contenue dans le CCW, incrémente cette adresse d'une unité et diminue le contenu de son registre de compte d'une unité. La mémoire principale place le premier octet sur le bus de sortie des données 18 et le canal le retransmet à l'unité de contrôle par le bus de sortie 25 et lève la ligne Sortie de service 28. Ce premier octet est le premier octet du champ de commande de la trame d'information de la Figure 7, c'est-à-dire l'octet contenant le bit R. Cet octet est stocké dans l'unité de contrôle et transmis par celle-ci qui ensuite demande les deuxième et troisième octets au canal de façon similaire à celle indiquée plus haut. Ces deux octets qui constituent le numéro N(S) de la trame en cours sont transmis sur la ligne de transmission et, si le bit R dans le premier octet est à "1" sont aussi stockés dans une table dit table de retransmission contenue dans une mémoire temporaire de l'unité de contrôle. On associe à chacun des numéros N(S) stockés dans la table de retransmission une variable V(T), dont la valeur est représentative de l'ordre de retransmission de la trame correspondante dans la séquence des trames transmises pour la première fois. La table d'émission est illustrée sur la Figure 8. L'unité de contrôle transmet les deuxième et troisième octets puis demande et transmet successivement les autres octets du bloc de données à transmettre qui constituent le champ d'information de la trame jusqu'à ce que le contenu du registre de compte du canal atteigne la valeur zéro. Lorsque ceci se produit, et que l'unité de contrôle lève la ligne Entrée de service 24, le canal en réponse lève la ligne Sortie de commande 26, ce qui indique une condition d'arrêt à l'unité de contrôle. L'unité de contrôle transmet alors successivement sur la ligne de transmission la séquence de contrôle de trame (FCS) et le fanion de fin de trame prévus par la procédure HDLC, lève la ligne Entrée d'état 23 et place sur le bus d'entrée 20 les conditions Fin sur canal et Fin sur unité. Le canal vérifie alors la valeur du bit indicateur CC du CCW en cours. Si celui-ci a la valeur 1 qui indique la chaînage des commandes, le canal demande à la mémoire principale de lui transférer le CCW suivant dont l'adresse est contenue dans le registre d'adresse de commande du canal et la transmission du second bloc de données prend place.

Si le bit indicateur CC du CCW en cours, a la valeur 0, le canal demande une interruption d'entrée-sortie à l'unité centrale de traitement 6 en levant la ligne Demande d'interruption 14, et attend que l'unité centrale de traitement 6 lève la ligne Interruption 11. Le canal place alors sur le bud d'entrée des données en mémoire 16 les conditions qui ont provoqué l'arrêt de l'opération pour inscription dans le mot d'état du canal CSW.

Le programme d'application initie alors la transmission du deuxième bloc de données qui s'effectue de façon identique à celle du premier bloc de données, et ainsi de suite.

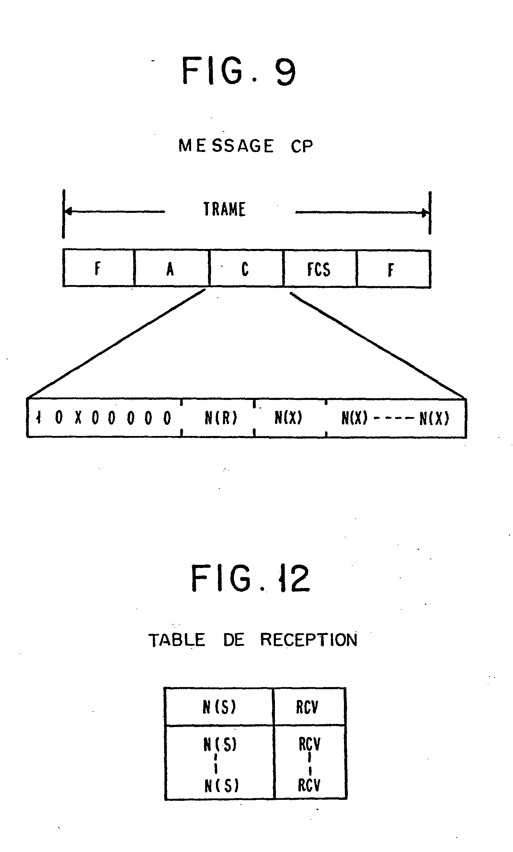

La station éloignée vérifie si les différentes trames d'information qu'elle reçoit sont correctes, notamment au moyen des séquences FCS, et écarte celles qui sont en erreur. Les numéros N(S) des trames reçues correctes sont emmagasinés par la station éloignée dans une table dite table de réception contenue dans sa mémoire principale. Après qu'un nombre prédéterminée de trames ait été reçu, ou après un intervalle de temps prédéterminé, la station éloignée émet un message de vérification (CP) à destination de la station locale. La durée de cet intervalle de temps est choisie notamment en fonction de la vitesse de transmission et du temps de propagation des trames entre les deux stations; dans une liaison par satellite fonctionnant à 64 Kbits/s. ou plus un intervalle de temps d'une durée de l'ordre de 100 ms semble approprié. Le message de vérification (CP) est transmis à la station locale au moyen par exemple de la trame de supervision (S) de la procédure HDLC, (voir la Figure 9). La trame de supervision (S) comprend, de façon connue, un fanion (F) de début de trame, l'adresse (A) de la station éloignée, un champ de commande (C), un champ de séquences FCS et un fanion (F) de fin de trame. Le champ de commande contient le message de vérification (CP) qui comprend:

| | | |
|---|---|---|
| Bit 1=1 et Bit 2=0 | : | Ces deux bits spécifient qu'il s'agit d'une trame de supervision. |
| Bit 3=X | : | L'utilisation du bit X est décrite plus loin. |
| Bits 4—8 | : | Bits de réserve. |
| Bits 9—24= N(R) | : | La valeur du numéro de séquence de réception N(R) est supérieure d'une unité à la valeur du N(S) de la trame d'information la plus récemment reçue dont le bit R était égal à O. Le numéro N(R) accuse réception de toutes les trames d'information jusqu'à la valeur de N(R) à l'exception de ce qui suit: |
| Bits 25-n= champ des n(X) | : | Ce champ contient des identificateurs désignés N(X), arrangés en ordre décroissant et égaux aux numéros N(S) des trames qui ont été reçues en erreur par la station éloignée, ces numéros N(S) étant inférieurs à N(R). Quand le bit X est à 1 les valeurs qui sont comprises entre le numéro N(R) et le plus élevé des N(X) sont aussi considérées comme des N(X). Le nombre n dépend du nombre maximum des N(X) prévus dans le message (CP). |

Le contenu du message de vérification est fourni par le programme d'application en cours dans la station éloignée. La trame véhiculant ce message est construite et transmise par l'unité de contrôle de la station secondaire éloignée de façon semblable à celle décrite plus haut en référence à la station de la Figure 1.

L'unité de contrôle de la station locale reçoit la trame contenant le message de vérification (CP), et si elle l'accepte, emmagasine le message de vérification dans un registre dit de retransmission. On supposera tout d'abord que le bit X du message de vérification (CP) a la valeur O. Dans l'unité de contrôle une opération de consultation de la table de retransmission est initiée comme suit. Pour chacun des N(X), on recherche dans la table si elle contient un N(S) qui lui est égal. Si aucun des N(S) n'est égal à N(X) un bit dit indicateur de retransmission associé avec ce N(X) particulier et qui est stocké dans le registre de retransmission est mis à 1. Si un des N(S) contenus dans la table est égal à N(X), on compare la variable V(T) associée à ce N(S) avec le N(R) du message de vérification (CP). Si la variable V(T) est égale ou supérieure à N(R) aucune action concernant la trame ayant le numéro N(S) n'est prise. Si la variable V(T) est inférieure à N(R) le bit indicateur de retransmission associé avec N(X) est aussi mis à "1". Si le bit X du message de vérification a la valeur 1, toutes les valeurs comprises entre N(R) et le plus élevé des N(X) sont aussi considérées comme des N(X). A la fin du traitement du message de vérification (CP) comme indiqué ci-dessus, le registre de retransmission contient les numéros N(S) des trames qui doivent être retransmises ou qui doivent être maintenues pour une future retransmission.

L'unité de contrôle met à 1 un bit désigné "Attention" dans son octet d'état et lève la ligne Demande d'entrée 241 indiquant au canal qu'il est prêt à lui transmettre de l'information. Le bit Attention existe dans l'octet d'état des canaux des systèmes IBM 360 et IBM 370. Lorsque l'unité de contrôle est sélectionnée comme vu plus haut, elle place l'octet d'état sur le bus d'entrée 20 et lève la ligne Entrée d'état 23. Le canal demande une interruption d'entrée sortie à l'unité centrale de traitement 6 en levant la ligne Demande d'interruption 14 et attend que l'unité centrale de traitement 6 lève la ligne Interruption 11. Le canal place alors sur le bus d'entrée des données en mémoire 16 les conditions qui ont provoqué l'interruption et notamment l'octet d'état de l'unité de contrôle dans le mot d'état du canal CSW. Le programme d'application reconnaît le bit Attention et initie une opération d'analyse à destination de l'unité de contrôle. L'opération d'analyse est une opération conventionnelle des systèmes types IBM 360 et IBM 370 et qui est similaire à une opération de lecture telle que décrite plus haut. Lorsque l'unité de contrôle détecte une commande Analyse elle place sur le bus d'entrée 20 le contenu du registre de retransmission qui est transféré dans la mémoire principale du calculateur. Le programme d'application provoque la retransmission de chacune des trames d'information dont le N(S) est égal à l'un des N(X) reçus du registre de retransmission dont le bit indicateur de retransmission est à "1" et libère les zones de mémoires contenant les trames dont le N(S) ne correspond à aucun des N(X) reçus quelle que soit la valeur du bit indicateur de retransmission associé à ces derniers. Les trames retransmises ont le bit R du champ de commande (C) mis à 1 indiquant qu'il s'agit d'une retransmission. Lorsque l'unité de contrôle reçoit une trame d'information pour retransmission, elle met à jour la valeur de la variable V(T) associée au N(S) de cette trame.

On a illustré en annexe un exemple de fonctionnement de l'invention. Dans cet exemple on a supposé que le temps de propagation aller-retour entre les stations correspondait à la durée de la transmission de 39 trames d'information et que les messages de vérification (CP) étaient émis par la station éloignée après que dix trames d'information aient été reçues. Les nombres 00, 01, ..., sont les numéros N(S) des trames transmises, un "x" accolé à un numéro indique que la trame ayant ce numéro est en erreur, et un "r" précédent un numéro indique qu'il s'agit d'une retransmission. Dans cet exemple, la valeur de la variable V(T) associée à une trame retransmise sera égale à celle du N(S) de la trame qui précède et qui n'est pas une retransmission, augmentée d'une unité. Cette valeur de V(T) représente bien l'ordre de retransmission de la trame dans la séquence des trames transmises pour la première fois.

La station locale émet successivement les trames 00, 01, ... etc. Lorsque la station éloignée a reçu la trame dont le N(S) est 09, elle émet son premier message de vérification (CP), qui, si la trame 03 par exemple est en erreur contiendra les indications N(R)=10, N(X)=03. (On ne tiendra pas compte du bit X précédemment mentionné du message CP).

Dans l'annexe, on a représenté ce message sous la forme

CP 10 (03)

A cause du délai de propagation ce message ne sera reçu par la station locale qu'après qu'elle ait émis 48 trames. La trame 03 n'ayant pas été encore retransmise, la station locale retransmet la trame 03 après la trame 48 et donne la valeur 49 à la variable V(T) associée à la trame 03. La station locale continue la transmission avec les trames 49, 50, ... . Après avoir émis la trame 57 elle reçoit le message

CP 20 (03)

émis par la station éloignée après que cette dernière ait reçu la trame 19. Ce message contient toujours N(X)=03 puisque lorsqu'elle l'a émis elle n'avait pas reçu la retransmission de la trame 03. La variable V(T) associée au N(S)=03 demande étant maintenant égale à 49 et dont supérieure au N(R)=20 du message de vérification, la station locale ne retransmet pas la trame 03 et continue la transmission avec des trames 58, 59, ... . Après avoir émis la trame 67, elle reçoit le message

CP 30 (26 25 03)

émis par la station éloignée après que cette dernière ait reçu la trame 29. Ce message contient toujours N(X)=03 puisque lorsqu'elle l'a émis elle n'avait pas encore reçu la retransmission de la trame 03, et contient aussi N(X)=25 et N(X)=26. La station locale retransmet les trames 25 et 26 après la trame 67 et donne la valeur 68 à la variable V(T) associée aux trames 25 et 26. La variable V(T) associée au N(S)=03 étant égale à 49 et donc supérieure au N(R)=30 du message de vérification, la station locale ne retransmet pas la trame 03 et continue la transmission avec les trames 68, 69, ..., et ainsi de suite.

Lorsque la station locale reçoit le message

CP 49 (45 26 25)

qui ne contient plus N(X)=03 et qui indique donc que la trame dont le N(S) est égal à 03 a été bien reçue par la station éloignée, l'inscription N(S)=03 dans la table de retransmission et la zone de mémoire contenant cette trame sont effacées. Les trames dont les N(S) sont égaux à 25 et 26 ne sont pas retransmises car elles ont déjà été retransmises et leur variable V(T) est égale à 68 et donc supérieure à N(R)=49. La trame correspondant à N(S)=45 est retransmise car elle n'a jamais été retransmise auparavant.

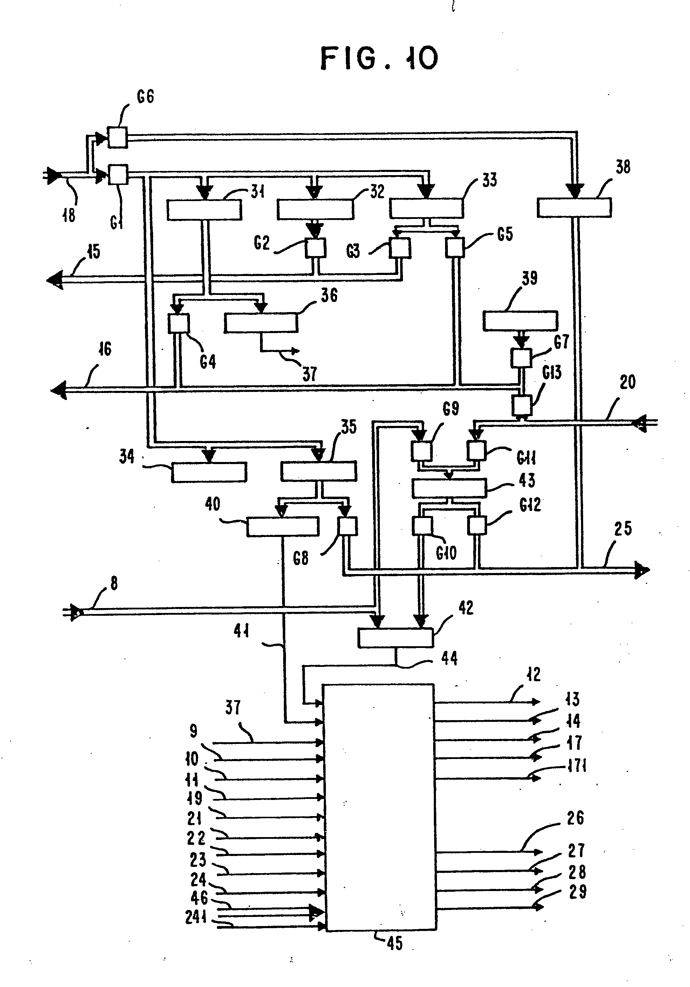

On a représenté sur la Figure 10 un exemple de réalisation du canal 7 de la Figure 1. Le canal illustré sur la Figure 10 est une version simplifiée du canal décrit dans le brevet français No. 1 452 625 et on pourra s'y référer pour plus de détails.

Le bus de sortie des données en mémoire 18 est relié à travers une porte G1 à un registre de compte 31, un registre d'adresse de données 32, un registre d'adresse de commande 33, un registre de bits indicateurs 34 et un registre de commande 35. Les sorties des registres 32 et 33 sont reliées respectivement à travers deux portes G2 et G3 au bus d'adresse de mémoire 15. Les sorties des registres 31 et 33 sont reliées respectivement à travers des portes G4 et G5 au bus d'entrée des données en mémoire 16. La sortie du registre 31 est en outre appliquée à un décodeur 36 qui fournit un signal sur une ligne 37 lorsque le contenu du registre 31 est à la valeur zéro. Le bus 18 est en outre relié à travers une porte G6 à l'entrée d'un registre tampon de données 38 dont la sortie est reliée au bus de sortie 25. Un registre d'état du canal 39 a sa sortie reliée au bus 16 à travers une porte G7. La sortie du registre 35 est reliée à un circuit de décodage 40 qui fournit un signal sur une ligne 41 lorsque le code de commande stocké dans le registre 35 est un code d'écriture. La sortie du registre 35 est aussi reliée à travers une porte G8 au bus de sortie 25. Le bus d'adresse 8 est reliée à une entrée d'un comparateur 42 et à travers une porte G9 à l'entrée d'un registre d'adresse d'unité 43 dont la sortie est reliée à travers une porte G10 à l'autre entrée du comparateur 42. Le comparateur 42 fournit un signal de concordance sur une ligne 44 lorsque ses deux entrées sont identiques. Le registre 43 a son entrée reliée aussi à travers une porte G11 au bus d'entrée 20. La sortie du registre 43 a sa sortie reliée à travers une porte G12 au bus de sortie 25. Le bus d'entrée 20 est relié au bus d'entrée des données en mémoire 16 à travers une porte G13. Un circuit logique de commande 45 reçoit comme entrées les lignes 9, 10, 11, 19, 21 à 24, 241 et 37, le contenu du registre d'état 39 par un bus 46, les lignes d'écriture 41 et de concordance 44, et les bits indicateurs stockés dans le registre 34 par des lignes non représentées. Le circuit 45 fournit comme sorties les lignes 12, 13, 14, 17, 171 et 26 à 29 et les lignes de commande des portes G1 à G13, qui n'ont pas été représentées sur la figure.

On décrira maintenant le fonctionnement du dispositif de la Figure 10.

Pour émettre la commande SACM, le CPU 6 lève les lignes 9 et 10 et place l'adresse d'unité sur le bus d'adresse 8. Le circuit de commande 45 détecte l'état des lignes 9 et 10 et l'état du canal qui lui est fourni par le bus 46 et si le canal est libre, place un code condition approprié, par exemple, 00, sur les lignes de condition 12 et 13 et lève la ligne de commande de la porte G9 rendant celle-ci conductrice. L'adresse d'unité sur le bus 8 est ainsi chargée dans le registre d'adresse d'unité 43 et dans un registre d'entrée (non représenté) du comparateur 42. Le circuit 45 lève alors la ligne Demande d'écriture 17, et la ligne de commande de la porte G3 plaçant ainsi l'adresse du CAW qui était contenu dans le registre d'adresse de commande 33 sur le bus d'adresse de mémoire 15. Lorsque la mémoire principale 5 lève la ligne Acceptation 19 le circuit 45 lève la ligne de commande de la porte G1 et l'adresse contenue dans le CAW, disponible sur le bus de sortie des données 18 est stockée dans le registre d'adresse de commande 33. Le circuit 45 lève alors la ligne Demande d'écriture 17 et la ligne de commande de la porte G3 et place l'adresse contenue dans le registre 33 sur le bus 15. Lorsqu'en réponse la mémoire 5 lève la ligne Acceptation 19, le circuit 45 lève la ligne de commande de la porte G1 et les champs Code Commande, Adresse des données, Bits indicateurs et Compte du CCW associé à la commande SACM disponible sur le bus 18 sont stockés respectivement dans les registres 35, 32, 34 et 31. Le circuit 45 lève alors les lignes Sortie d'adresse 27 et Sortie de Sélection 29 et la ligne de commande de la porte G12 plaçant ainsi l'adresse d'unité contenue dans le registre 43 sur le bus de sortie 25. Lorsque l'unité de contrôle 2 lève les lignes Entrée disponible 21 et Entrée d'adresse 22, le circuit 45 lève la ligne de commande de la porte G11 permettant à l'adresse sur le bus d'entrée 20 d'être emmagasinée dans le registre 43. Le circuit 45 lève alors la ligne de commande de la porte G10 et l'adresse d'unité fournie par l'unité de contrôle 2 est comparée avec celle fournie par le CPU et qui est disponible dans le registre d'entrée du comparateur 42. Si ces deux adresses sont identiques, le comparateur 42 lève la ligne de concordance 44. Le circuit 45 détecte l'état de la ligne 44 et lève la ligne Sortie de commande 26 et la ligne de commande de la porte G8 plaçant le code de commande sur le bus de sortie 25. Lorsque l'unité de contrôle lève la ligne Entrée d'état 23, le circuit 45 lève la ligne de commande d'une porte non représentée et l'état sur le bus d'entrée est chargé dans le registre d'état 39. En réponse à l'état du canal dans le registre 39, le circuit 45 place le code approprié sur les lignes de condition 12 et 13. La transmission de la commande SACM commence. Lorsque l'unité de contrôle 2 lève la ligne Entrée de service 24, le circuit de commande 45 lève la ligne Demande d'écriture 17, et la ligne de commande de la porte G2 plaçant ainsi l'adresse contenue dans le registre d'adresse de données 32 sur le bus d'adresse de mémoire 15. Lorsqu'en réponse la mémoire principale 5 lève la ligne Acceptation 19, le circuit 45 lève la ligne de commande de la porte G6, ce qui permet à l'octet demandé d'être placé sur le bus de sortie 25 à travers le registre tampon 38, accroît le contenu du registre 32 d'une unité et diminue celui du registre 31 d'un unité par des moyens non représentés et lève la ligne Sortie de service 28.

Le contenu du registre 31 ayant atteint la valeur zéro, puisque la commande SACM ne comprend qu'un octet, le circuit de décodage 36 lève la ligne 37 et lorsque l'unité de contrôle 2 demande un autre octet en levant la ligne Entrée de service 24, le circuit 45 lève la ligne Sortie de commande 26 ce qui indique une condition d'arrêt à l'unité de contrôle. Lorsque le canal reçoit les conditions Fin sur canal et Fin sur unité, celles-ci sont stockées dans le registre d'état 39. Lorsque le circuit 45 détecte ces conditions, il vérifie l'état du bit indicateurs CC. Le bit indicateur CC ayant la valeur 0, le circuit 45 lève la ligne Demande d'interruption 14. Lorsque le CPU lève la ligne interruption 11, le circuit 45 lève les lignes de commande de portes G4, G5 et G7 plaçant le contenu des registres 31, 33 et 39 sur le bus d'entrée des données en mémoire 16 pour inscription dans le CSW.

Le canal 7 transfère les différents messages et les blocs de données à l'unité de contrôle 2 de façon semblable au moyen des mots de commande du canal leur sont associés. Pour une opération de lecture ou d'analyse par le canal, l'unité de contrôle 2 est tout d'abord sélectionnée de façon identique à celle décrite ci-dessus, au moyen du CCW qui commande l'opération. Lorsque l'unité de contrôle 2 lève les lignes Entrée disponible 21 et Entrée de service 24, le circuit de commande 45 lève la ligne Demande de lecture 171 et la ligne de commande de la porte G2 plaçant ainsi l'adresse contenue dans le registre d'adresse de données 32 sur le bus d'adresse de mémoire 15. Lorsqu'en réponse la mémoire principale 5 lève la ligne Acceptation 19, le circuit 45 lève la ligne de commande de la porte G13 ce qui permet à l'octet transféré par l'unité de contrôle 2 sur le bus d'entrée du canal 20 d'être placé sur le bus d'entrée des données 16 pour emmagasinage dans la mémoire principale 5. Le canal accroit le contenu du registre 31 d'une unité et lève la ligne Sortie de service 28. Le transfert des autres octets fournis par l'unité de contrôle 2 s'effectue de façon semblable. Une opération de lecture ou d'analyse se termine comme une opération d'écriture.

En outre lorsque le circuit 45 détecte que la ligne Demande d'entrée 241 est levée, par exemple parce que l'unité de contrôle 2 a reçu un message de vérification (CP), il lève la ligne Sortie de sélection 29 et l'unité de contrôle place son adresse sur le bus d'entrée 20 et lève les lignes Entrée disponible 21 et Entrée d'adresse 22. Lorsque le canal a reconnu l'adresse, le circuit 45 lève la ligne Sortie de

# 0 046 831

commande 26, et en réponse l'unité de contrôle place l'octet d'état sur le bus d'entrée 20 et lève la ligne Entrée d'état 23. Le circuit 45 lève la ligne de commande d'une porte non représentée et l'octet d'état est chargé dans le registre 39. Le canal demande ensuite une interruption pour transférer cet octet à la mémoire principale. Le programme d'application dans le calculateur prend alors connaissance de l'octet d'état et peut par exemple initier une opération d'analyse.

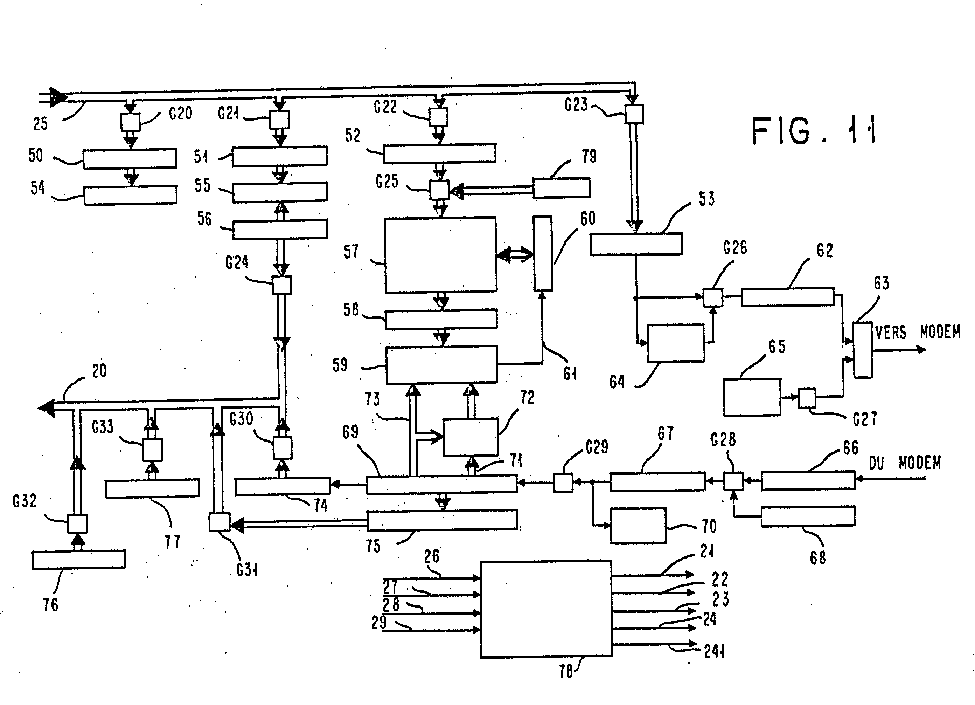

On a représenté sur la Figure 11 un exemple de réalisation de l'unité de contrôle 2 de la Figure 1. L'unité de contrôle illustrée sur la Figure 11, est une version simplifiée de l'unité de contrôle IBM 2701, modifiée de façon à inclure l'invention. Pour plus de détails sur l'unité de contrôle IBM 2701 on pourra se référer à la documentation IBM et, par exemple, au document "Component Description: IBM 2701 Data Adapter Unit", référence 2701-02 No. GA 22-6864-5.

Le bus de sortie 25 du canal 7 est relié respectivement à travers des portes G20, G21, G22 et G23 à un registre de commande 50, un registre d'adresse 51, un registre de champ de commande 52 et un convertisseur parallèle-série 53. Le registre de commande 50 est relié à un circuit de décodage 54. Le registre d'adresse 51 est relié à une entrée d'un comparateur 55 dont l'autre entrée est reliée à un générateur d'adresse 56. Ce dernier est relié aussi au bus d'entrée 20 du canal 7 à travers une porte G24. Le registre 52 est reliée à l'entrée d'une mémoire 57 à travers une porte G25. La sortie de la mémoire 57 est reliée à un registre de sortie 58 lui-même relié à une logique de comparaison 59. La lecture et l'écriture de la mémoire 57 sont commandées par un circuit d'adressage 60 qui est relié à la logique de comparaison 59 par une ligne 61. La sortie du convertisseur parallèle-série 53 est reliée à travers une porte G26 à un dispositif d'insertion de zéros 62 qui est de conception connue et qui est largement utilisée dans tous les terminaux utilisant les procédures HDLC. La sortie du dispositif 62 est reliée au modem de la station à travers une porte OU 63. La sortie du convertisseur parallèle-série 53 est en outre reliée à un dispositif de génération de séquence de contrôle de trame FCS 64 qui est aussi de conception connue et largement utilisé dans les terminaux utilisant une procédure HDLC. Un générateur de fanion 65 est relié à une autre entrée de la porte OU 63 à travers une porte G27. La sortie du modem de la station est reliée à un registre tampon 66 pouvant emmagasiner un octet, et dont la sortie est reliée à travers une porte G28 à un dispositif de suppression de zéros 67 qui est le réciproque du dispositif 62. Le registre 66 est aussi reliée à un dispositif de décodage 68. La sortie du dispositif 67 est reliée à un registre tampon 69 pouvant contenir une trame à travers une porte G29 et à un dispositif de vérification de séquences FCS 70 qui est le réciproque du dispositif 64. Le registre tampon 69 est relié par un bus 71 à une logique de sélection des N(X) 72 dont la sortie est reliée à la logique de comparaison 59, et par un bus 73 à la logique de comparaison 59 et à la logique de sélection des N(X) 72. La sortie du registre tampon 69 est reliée à un convertisseur série-parallèle 74 dont la sortie est reliée au bus d'entrée 20 à travers une porte G30. Le registre-tampon 69 est aussi relié à un registre de retransmission 75 dont la sortie est reliée au bus d'entrée 20 à travers une porte G31. Un registre d'état 76 et un registre d'analyse 77 sont reliés au bus d'entrée 20 à travers des portes G32 et G33 respectivement. Un circuit logique de commande 78 reçoit les lignes 26 à 29, l'état des différents composants de la Figure 11 par des lignes non représentées et a comme sorties les lignes 21 à 24 et 241 et les lignes de commande non représentées des portes G20 à G33. Un registre 79 est reliée à la mémoire 57 à travers la porte G25.

L'unité de contrôle entre en fonction lorsque le canal 7 lève les lignes Sortie d'adresse 27 et Sortie de sélection 29 et place l'adresse d'unité sur le bus de sortie 25. Le circuit de commande 78 détecte l'état des lignes 27 et 29 et lève la ligne de commande de la porte G21 permettant à l'adresse d'unité sur le bus de sortie 25 d'être emmagasinée dans le registre d'adresse 51 pour être comparée avec l'adresse d'unité générée par le dispositif 56. Si ces deux adresses sont identiques, le circuit 78 lève les lignes Entrée disponible 21 et Entrée d'adresse 22, et la ligne de commande de la porte G24 plaçant ainsi l'adresse d'unité générée par le dispositif 56 sur le bus d'entrée 20. Lorsque le canal 7 lève la ligne Sortie de commande 26 et place le code de commande sur le bus de sortie 25, le circuit 78 lève la ligne de commande de la porte G20, ce qui transfère le code de commande du CCW en cours dans le registre de commande 50.

Lorsque la station émet des trames, que ces trames soient des trames d'information, des trames non séquentielles ou des trames de supervision, le code commande du CCW est un code écriture. Lorsque le circuit de décodage 54 reconnaît ce code il en informe le circuit de commande 78 qui lève la ligne de commande de la porte G27 et le générateur de fanion 65 génère le fanion de début de trame qui est envoyé au modem à travers la porte OU 63. Lorsque le fanion a été envoyé le circuit de commande 78 lève la ligne Entrée de service 24 et la ligne de la commande de la porte G23. L'octet placé alors par le canal sur le bus de sortie 25 est l'adresse de la station éloignée qui est convertie en série par le convertisseur 53 et envoyée au modem à travers le dispositif 62 et la porte OU 63. Lorsque le convertisseur parallèle-série 53 est vide, le circuit de commande 78 lève de nouveau la ligne Entrée de service 24 et la ligne de commande de la porte 63 pour la transmission du deuxième octet fourni par le canal, et ainsi de suite. Lorsque le circuit de commande 78 lève la ligne Entrée de service 24 et qu'en réponse le canal lève la ligne Sortie de commande 26, ce qui indique que le canal n'a plus d'octet à transmettre, le circuit de commande 78 lève la ligne de commande de la porte G26 et la séquence FCS générée par le générateur 64 est envoyée au modem. Le fanion de fin de trame est ensuite envoyé au modem à travers les portes G27 et 63. Le circuit de commande 78 lève ensuite la ligne Entrée d'état 23 et la ligne de commande de la porte G32 plaçant ainsi sur le bus d'entrée 20 le contenu du registre d'état 76 dans lequel les conditions Fin sur canal et Fin sur unité ont été inscrites.

Les trois octets qui suivent le premier octet fourni par le canal sont en outre chargés dans le registre 52 à travers la porte G23. Le premier de ces trois octets est le premier octet du champ de commande (C) de la trame. Lorsque le circuit de commande 78 détecte que le premier bit de ce premier octet a la valeur "0", ce qui indique qu'il s'agit d'une trame d'information (Figure 7), et que le bit R a la valeur "1", les deux autres octets contenus dans le registre 52, qui constituent le numéro de séquence N(S) de la trame, sont emmagasinés dans la table de retransmission stockée dans la mémoire 57 à travers la porte G25 et sous la commande du circuit d'adressage 60.

Le circuit de commande 78 inscrit la valeur de V(T) dans le registre 79 comme expliqué ci-dessous. Si le bit R dans le registre 52 a la valeur "0" la valeur de V(T) inscrite dans le registre 79 est égale au nombre entier immédiatement supérieur au N(S) contenu dans le registre 52. La valeur de V(T) ainsi définie est inscrite dans le registre 79 après que la trame correspondante ait été transmise. Si le bit R a la valeur "1" la valeur de V(T) contenue dans le registre 79 n'est pas modifiée.

Le circuit de commande 78 inscrit la variable V(T) dans la table de retransmission contenue dans la mémoire 57 de la façon suivante. Si le bit R dans le registre 52 a la valeur "1", la valeur de V(T) contenue dans le registre 79 est copiée dans le champ V(T) associé au N(S) en cours qui vient d'être inscrit dans la table d'émission à partir du registre 52. Si le bit R a la valeur "0", la valeur de V(T) contenue dans le registre 79 n'est pas copiée dans la table de retransmission.

Les bits reçus du modem par la station dont l'unité de contrôle est illustrée sur la Figure 11 sont emmagasinés dans le registre tampon 66. Lorsque le circuit de décodage 68 reconnaît un fanion de début de trame dans le contenu du registre 66, il rend conductrice la porte G28 façon à permettre aux bits reçus qui suivent le fanion d'être appliqués au dispositif de suppression des zéros 67 puis emmagasinés dans le registre tampon 69. La porte G28 est rendue non conductrice lorsque le circuit de décodage 68 reconnaît un fanion de fin de trame. On doit noter que les fanions n'atteignent pas les dispositifs en aval de la porte G28 et que le contrôle de la porte G29 permet de ne pas charger la séquence FCS de la trame reçue dans le registre tampon 69.

Si la trame contenue dans le registre tampon 69 est jugée en erreur parce que notamment le dispositif de vérification 70 en a décidé ainsi le contenu du registre tampon 69 est effacé.

Lorsque le circuit de commande 78 reconnaît une réponse UA dans le champ de commande de la trame contenue dans le registre tampon 69, il attend une opération de lecture par le canal. Lorsque l'unité de contrôle a été sélectionnée comme vu plus haut, et que le circuit de décodage 54 reconnaît une commande de lecture dans le contenu du registre de commande 50, le circuit de commande 78 lève la ligne Entrée disponible 21 et la ligne de commande de la porte G30 et la réponse UA est transférée au canal par le bus d'entrée 20.

Lorsque le circuit de commande 78 reconnaît un message de vérification (CP) dans le contenu du registre tampon 69, il provoque l'emmagasinage de ce message dans le registre de retransmission 75 et applique le numéro N(R) de ce message à la logique de comparaison 59 et à la logique de sélection des N(X) 72 par le bus 73. Si le bit X du message de vérification (CP) a la valeur 0 la logique de sélection 72 transfère le premier N(X) du message à la logique de comparaison 59. Le circuit d'adressage 60 commande une opération de consultation de la table de retransmission pour déterminer si celle-ci contient un N(S) égal au premier N(X). Cette opération est réalisée par lecture séquentielle des rangées de la table et comparaison des N(S) lus avec le premier N(X) dans la logique 53. Si aucun des N(S) contenus dans la table n'est égal au premier N(X) le bit de retransmission contenu dans le registre 75 et associé au premier N(X) est mis à 1. Si un des N(S) contenus dans la table est égale au premier N(X), la variable V(T) associée à ce N(S) particulier est chargée dans le registre 58 pour comparaison avec N(R). Si cette variable V(T) est inférieure à N(R) le bit indicateur de retransmission contenu dans le registre 75 et associé au premier N(X) est mis à "1". Si la variable V(T) est égale ou supérieure à N(R) le bit indicateur de retransmission est mis à "0". Ensuite, le second N(X) du message de vérification contenu dans le registre 69 est appliqué par la logique de sélection 72 à la logique de comparaison 59 et un nouveau cycle de recherche des N(S) commence, et ainsi de suite jusqu'à ce que tous les N(X) du message de vérification (CP) aient été traités.

Si le bit X du message de vérification (CP) stocké dans le registre tampon 69 a la valeur 1, la logique de sélection 72 fournit séquentiellement les valeurs comprises entre N(R) et le plus élevé des N(X) à la logique de comparaison 59 qui considère ces valeurs comme des N(X). La logique de sélection 72 fournit ensuite à la logique de comparaison 59 les N(X) du message de vérification (CP) stocké dans le registre tampon 69.

Le circuit de commande 78 met à 1 la valeur du bit Attention stocké dans le registre d'état 76 et lève la ligne Demande d'entrée 241. Lorsque le canal détecte que cette ligne est levée, il lève la ligne Sortie de sélection 29 et le circuit de commande 78 lève les lignes Entrée disponible 21, Entrée d'adresse 22 et la ligne de commande de la porte G24 plaçant l'adresse fournie par le générateur 56 sur le bus d'entrée 20. Lorsque le canal a reconnu l'adresse, il lève la ligne Sortie de commande 26 et en réponse le circuit de commande 78 lève la ligne Entrée d'état 23 et la ligne de commande de la porte G32 plaçant le contenu du registre d'état 76 sur le bus d'entrée 20. Le programme d'application reconnaît que le bit Attention a la valeur 1 et initie une opération d'analyse. Lorsque le circuit de décodage 54 détecte la commande Analyse qui a été chargée dans le registre 50 par le canal, il lève les lignes de commande des portes G31 et G33 et place séquentiellement le contenu du registre d'analyse 77 qui contient une identification de l'opération d'analyse et le contenu du registre de retransmission 75 pour emmagasinage dans la mémoire principale 5. Le programme d'application prend connaissance de la valeur de N(R) et de la valeur des N(S) des trames à retransmettre. Le programme d'application libère les positions de la mémoire principale contenant les trames ayant un N(S) différent des N(X) reçus du registre de retransmission quelle que soit la valeur des bits indicateurs de retransmission associés à ces N(X), et inférieur à N(R). Le programme initie ensuite la retransmission des trames demandées.

Lorsque le circuit de commande 78 reconnaît une trame d'information dans le contenu du registre tampon 69, il attend une opération de lecture par le canal puis transfère la trame d'information à la mémoire principale 5 à travers le canal. Le programme d'application prend note de la réception de la trame au moyen d'une table de réception stockée dans la mémoire principale 5. La Figure 12 illustre un exemple de table de réception. Cette table comprend le N(S) des trames d'information attendues et associé à chacun des N(S) un bit de réception RCV qui est mis à 1 lorsque la trame est reçue sans erreur. Après un intervalle de temps prédéterminé déterminé par les services de chronologie de calculateur 1, le programme d'application prépare le message de vérification (CP) qui doit être envoyé à la station qui lui a envoyé les trames d'information. Il note le N(S) de la trame la plus récemment reçue non en erreur et non retransmise, c'est-à-dire le N(S) dans la table de réception ayant la valeur la plus élevée et le bit RCV associé à 1, et en déduit le N(R), et par consultation de la table de réception il détermine le N(S) des trames reçues en erreur dont il va demander la retransmission. Après avoir construit le message de vérification (CP) il initie une opération d'écriture pour le transmettre à la station destinatrice.

Bien que dans ce qui précède on ait décrit une station de données dans laquelle les messages de vérification (CP) reçus étaient traités dans l'unité de contrôle et dans laquelle l'élaboration des messages de vérification (CP) à transmettre était faite par le calculateur, l'homme de l'art comprendra que la répartition des tâches entre le calculateur et l'unité de contrôle peut être différente sans pour autant sortir du cadre de la présente invention.

Bien que l'on ait décrit dans ce que précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortie du cadre de ladite invention.

ANNEXE

```
00    01    02    03x   04    05    06    07    08    09
10    11    12    13    14    15    16    17    18    19
20    21    22    23    24    25x   26x   27    28    29
30    31    32    33    34    35    36    37    38    39
40    41    42    43    44    45x   46    47    48
```

CP 10 (03)

```
10    11    12    13    14    15    16    17    18    19
20    21    22    23    24    25x   26x   27    28    29
30    31    32    33    34    35    36    37    38    39
40    41    42    43    44    45x   46    47    48    r03
49    50    51    52    53    54    55    56    57
```

CP 20 (03)

```
20    21    22    23    24    25x   26x   27    28    29
30    31    32    33    34    35    36    37    38    39
40    41    42    43    44    45x   46    47    48    r03
49    50    51    52    53    54    55    56    57    58
59    60    61    62    63    64    65    66    67
```

CP 30 (26 25 02)

```
30    31    32    33    34    35    36    37    38    39
40    41    42    43    44    45x   46    47    48    r03
49    50    51    52    53    54    55    56    57    58
59    60    61x   62    63    64    65    66    67    r25
r26   68    69    70    71    72    73    74    75
```

CP 40 (26 25 03)

```
40    41    42    43    44    45x   46    47    48    r03
49    50    51    52    53    54    55    56    57    58
59    60    61x   62    63    64    65    66    67    r25
r26   68    69    70    71    72    73    74    75    76
77    78    79    80    81    82    83    84    85
```

CP 49 (45 26 25)

```
49    50    51    52    35    54    55    56    57    58
59    60    61x   63    63    64    65    66    67    r25
r26   68    69    70    71    72    73    74    75    76
77    78    79    80    81    82    83    84    85    r45
86    87    88    89    90    91    93x   94
```

CP 59 (45 26 25)

## Revendications

1. Système de retransmission des trames en erreur dans un système de transmission de données dans lequel une station émettrice émet à destination d'une station réceptrice des trames d'information numérotées en séquence, chaque trame comprenant un numéro (N(S)) de séquence d'émission et un champ d'information, et dans lequel la station réceptrice comprend des moyens (69) pour recevoir les trames d'information, des moyens (70) pour vérifier les trames reçues pour déterminer la présence d'erreurs, et des moyens (Fig. 12) pour déterminer le numéro (N(S)) des trames d'information reçues en erreur, caractérisé en ce que la station réceptrice comprend:
des moyens (1, Fig. 12) pour émettre un message de vérification à destination de la station émettrice, après que la station réceptrice ait reçu un nombre prédéterminé supérieur à 1 de trames d'information, le message comprenant un numéro de séquence de réception (N(R)) représentatif du numéro de séquence d'émission (N(S)) de la trame d'information correcte non retransmise la plus récemment reçue, et si au moins une trame reçue est en erreur au moins un identificateur (N(X))

16

représentatif du numéro de séquence d'émission (N(S)) de ladite au moins une trame reçue en erreur et dont la retransmission est demandée,

et en ce que la station émettrice comprend:

des moyens (69) pour recevoir le message de vérification,

des moyens de retransmission (52, 57, 59, 60, 75) pour retransmettre les trames dont le numéro de séquence d'émission (N(S)) est égal à l'un des identificateurs (N(X)) du message de vérification et qui n'ont pas déjà été retransmises, pour associer à chacune des trames retransmises une variable (V(T)) dont la valeur est représentative de l'ordre de retransmission de la trame dans le séquence des trames transmises pour la première fois, et pour retransmettre les trames dont le numéro de séquence d'émission (N)S)) est égal à l'un des identificateurs (N(X)) et qui ont déjà été retransmises uniquement si la variable V(T) associée à ces trames a une valeur inférieure à celle du numéro de séquence de réception (N(R)) du message de vérification, et

des moyens (52, 79) pour mettre à jour la valeur de la variable d'état d'émission (V(T)) associée avec chacune des trames d'information retransmises.

2. Système selon la revendication 1, caractérisé en ce que chaque trame d'information contient un bit de retransmission (R) qui indique si cette trame est une retransmission.

3. Système selon la revendication 1, caractérisé en ce que le message de vérification comprend un bit (X) qui indique si les valeurs comprises entre le numéro de séquence de réception (N(R)) et le plus élevé des identificateurs (N(X)) doivent aussi être considérées comme des identificateurs (N(X)).

4. Système selon l'une quelconque des revendications précédentes, caractérisé en ce que la station réceptrice émet les messages de vérification sur une base périodique.

**Patentansprüche**

1. System feur die Neuuebertragung gestoerter numerierter Rahmen in einem Datenuebertragungssystem, in dem eine Sender-Station an eine Empfaenger-Station entsprechend Folgen numerierte Informationsrahmen sendet, wobei jedem Rahmen eine der Sendungsfolge entsprechende Zahl (N(S)) und ein Informationsfeld zugewiesen sind, in dem die Empfaenger-Station Mittel (69) zum Empfangen der Informationsrahmen, Mittel (70) zur Pruefung der empfangenen Rahmen auf das Vorhandensein von Fehlern und Mittel (Fig. 12) zur Bestimmung der Zahl (N(S)) der gestoerten empfangenen Informationsrahmen aufweist, dadurch gekennzeichnet, dass die Empfaenger-Station aufweist:

Mittel (1, Figur 12) zur Sendung einer Pruefungsnachricht an die Sender-Station, nachdem die Empfaenger-Station eine hoeher als 1 voreingestellte Zahl von Informationsrahmen empfangen hat, wobei diese Nachricht eine Folgezahl fuer den Empfang (N(R)), die die Folgezahl fuer die Sendung (N(S)) des richtigen zuletzt empfangenen aber nicht erneut uebertragenen Informationsrahmens darstellt, und, falls ein empfangener Rahmen gestoert ist, mindestens ein Kennzeichen (N(X)), das die Folgezahl fuer die Sendung (N(S)) von mindestens eines gestoerten empfangenen Rahmens darstellt, aufweist, wobei die Neuuebertragung dieses Rahmens angefordert ist.

und das die Sender-Station aufweist:

Mittel (69) zum Empfangen der Pruefungsnachricht,

Neuuebertragungsmittel (52, 57, 59, 60, 75) zum erneuten Uebertragen der Rahmen, deren jeweiligen Folgezahlen fuer die Sendung (N(S)) einem der Kennzeichen (N(S)) der Pruefungsnachricht gleich sind, und die nicht erneut eubertragen wurden, so dass jeweils einem erneut uebertragenen Rahmen eine Variable (V(T)) zugeordnet ist, deren Wert die Reihenfolge der Rahmen-Neuuebertragung in der Folge der zum ersten Mal uebertragenen Rahmen darstellt, und so dass die Rahmen mit einer einem der Kennzeichen (N(X)) gleichen Folgezahl fuer die Sendung (N(S)) erneut uebertragen werden, welche Rahmen nur bereits erneut uebertragen wurden, wenn die diesen Rahmen zugeordnete Variable (V(T)) einen Wert aufweist, der hinter dem der Folgezahl fuer den Empfang (N(R)) der Pruefungsnachricht zuruckliegt, und

Mittel (52, 79) zum Aktualisieren des Wertes der jedem der erneut uebertragenen Informationsrahmen zugeordneten Variable fuer den Sendungszustand (V(T)).

2. System nach Anspruch 1, dadurch gekennzeichnet, dass jeder Informationsrahmen ein Neuuebertragunsbit (R) enthaelt, das anzeigt, ob dieser Rahmen eine Neuuebertragung ist.

3. System nach Anspruch 1, dadurch gekennzeichnet, dass die Pruefungsnachricht ein Bit (X) enthaelt, das anzeigt, ob die Werte zwischen der Folgezahl fuer den Empfang (N(R)) und dem hoechsten Kennzeichen (N(X)) auch als Kennzeichen (N(X)) beachtet werden sollen.

4. System nach einem der vorhergehenden Ansprueche, dadurch gekennzeichnet, dass die Empfaenger-Station jenach einer regelmaessigen Basis die Pruefungsnachrichten sendet.

**Claims**

1. A system for retransmitting incorrect frames in a data transmission system in which a transmitting station sends sequentially numbered information frames to a receiving station, each of said frames including a send sequence number (N(S)) and an information field, and in which the

**0 046 831**

receiving station includes means (69) for receiving said information frames, means (70) for checking received frames for errors, and means (Figure 12) for determining the send sequence number (N(S)) of received frames found to be in error, characterized in that the receiving station includes:

means (1, Figure 12) for transmitting a checkpoint message to the transmitting station, after the receiving station has received a predetermined number of information frames exceding 1, the message comprising a receive sequence number (N(R)) representative of the send sequence number (N(R)) of the most recently received, error-free, non-retransmitted information frame, and, if at least one incorrect frame was received, at least one identifier (N(X)) representative of the send sequence number (N(S)) of said at least one incorrect frame whose retransmission is requested,

and in that the transmitting station includes:

means (69) for receiving said checkpoint message,

retransmission means (52, 57, 59, 60, 75) for retransmitting those frames whose send sequence number (N(S)) is equal to one of the identifiers (N(X)) of the checkpoint message and which have not previously been retransmitted for associating with each retransmitted frame a variable (V(T)) whose value is representative of the order in which the frame is retransmitted relative to the sequence of frames transmitted for the first time, and for retransmitting those frames whose send sequence number (N(S)) is equal to one of the identifiers (N(X)) and which have previously been retransmitted solely if the value of the variable V(T) associated with such frames is less than that of the receive sequence number (N(R)) in the checkpoint message, and

means (52, 79) for updating the value of the send state variable (V(T)) associated with each retransmitted information frame.

2. The system according to claim 1 characterized in that each information frame includes a retransmission bit (R) indicating that this frame is a retransmission.

3. The system according to claim 1 characterized in that the checkpoint message includes a bit (X) indicating whether those values which lie between the receive sequence number (N(R)) and the highest of the identifiers (N(X)) are also to be considered as identifiers (N(X)).

4. The system according to any one of the previous claims, characterized in that the receiving station send the checkpoint messages on a periodic basis.

FIG. 1

# FIG. 2

## DEPART E/S

| CODE OP. | //////// | ADR.DU CANAL | ADR.DE L'UNITE |
|---|---|---|---|

0        7 8          15 16        .23 24        31

# FIG. 3

## CCW

| CODE CDE | ADRESSE DES DONNEES |
|---|---|

0       7 8                       31

| BITS INDICAT. | 000 | //////// | COMPTE |
|---|---|---|---|

32        36 37  39 40        47 48        .63

# FIG.4

## CAW

| CLE | 0000 | ADRESSE DE LA COMMANDE |
|---|---|---|

0   3 4   7 8               31

# FIG.5

## CSW

| CLE | 0000 | ADRESSE DE LA COMMANDE |
|---|---|---|

0   3 4   7 8               31

| ETAT | COMPTE |
|---|---|

32            47 48          63

# FIG. 6

COMMANDE SCAM

TRAME

| F | A | C | FCS | F |

| 1 | 1 | M | M | 1 | M | M | M |

# FIG .7

TRAME I

TRAME

| F | A | C | Info | FCS | F |

| 0 R 0 0 0 0 0 0 | N(S) |

# FIG.8

TABLE DE RETRANSMISSION

| N(S) | V(T) |
|------|------|
| N(S)<br>⋮<br>N(S) | V(T)<br>⋮<br>V(T) |

# FIG. 9

MESSAGE CP

| | | | | |
|---|---|---|---|---|
| F | A | C | FCS | F |

TRAME

| 1 0 X 0 0 0 0 0 | N(R) | N(X) | N(X) ---- N(X) |
|---|---|---|---|

# FIG. 12

TABLE DE RECEPTION

| N (S) | RCV |
|---|---|
| N(S) ⋮ N(S) | RCV ⋮ RCV |

4

# FIG. 10

FIG. 11